# EUROPEAN PATENT SPECIFICATION

(11) **EP 3 006 312 B1**
(45) Date of publication and mention of the grant of the patent: **09.08.2017**
(21) Application number: 14819934.2
(22) Date of filing: 30.06.2014
(51) Int. Cl.: B62K 5/10, B62K 5/027, B62K 5/05, B62K 5/08, B62J 3/00

(54) **VEHICLE**
FAHRZEUG
VÉHICULE

(30) Priority: 01.07.2013 JP 2013138487
(43) Date of publication of application: 13.04.2016
(73) Proprietor: Yamaha Hatsudoki Kabushiki Kaisha, Iwata-shi, Shizuoka 438-8501 (JP)
(72) Inventor: IIZUKA, Toshio, Iwata-shi Shizuoka 438-8501 (JP)
(74) Representative: Grünecker Patent- und Rechtsanwälte PartG mbB
(86) International application number: PCT/JP2014/067484
(87) International publication number: WO 2015/002171

(56) References cited:
- JP-A- H04 208 682
- JP-A- H05 139 357
- JP-A- H10 226 374
- JP-A- H11 115 853
- JP-A- 2010 228 551
- US-S1- D 656 435

## Description

### Technical Field

The present invention relates to a vehicle which comprises a leanable body frame and two front wheels which are arranged side by side in a left-right direction of the body frame.

### Background of the Invention

It is known a vehicle comprising a body frame which leans in a left-right direction of the vehicle when the vehicle turns to the left or the right and two front wheels which are arranged side by side in a left-right direction of the body frame (refer to Patent Document 1, Patent Document 2, Patent Document 3 and Non-patent Document 1, for example). This type of vehicle is a vehicle which can turn with its body frame leaning from a vertical direction. More specifically, the body frame leans to the right of the vehicle when the vehicle turns to the right, while when the vehicle turns to the left, the body frame leans to the left of the vehicle. In this type of vehicle, a distance between the two front wheels which are arranged side by side in the left-right direction of the body frame is very short, compared with a general four-wheeled vehicle, so as to ensure a large leaning quantity of the body frame. Consequently, this type of vehicle is compact in size in relation to the left-right direction of the body frame.

It is required to mount a horn on a vehicle as a warning device which warns other vehicles or pedestrians by issuing a warning sound toward the front of the vehicle. The horn is disposed in a position where a warning sound having a sufficient sound pressure to warn other vehicles or pedestrians can be secured. In vehicles described in Patent Document 1 and Non-Patent Document 1, a horn is accommodated in a body cover which is disposed directly above front wheels.

### Prior Art Document

### Patent Document

[Patent Document 1] United States Design Patent D547, 242S
[Patent Document 2] Japanese Patent Application Publication No. H05 139357 A
[Patent Document 3] United States Design Patent D656, 435S1

### Non-Patent Document

[Non-patent Document 1] Catalogo parti di ricambio, MP3 300 ie LT Mod. ZAPM64102, Piaggio

### Summary of the Invention

### Problem that the Invention is to Solve

In the case of the vehicles described in Patent Document 1 and Non-Patent Document 1, at least a part of a link mechanism which moves two front wheels in an interlocked fashion is disposed within the body cover which is disposed directly above the front wheels. The horn is disposed between the body cover and the link mechanism in relation to a front-rear direction of a body frame to ensure the sound pressure of the warning sound issued toward the front of the vehicle while avoiding the movable range of the link mechanism. Consequently, the body cover is enlarged in size, which hence leads to an enlargement in size of the vehicle.

Thus, an object of the invention is to reduce the size of a vehicle comprising a leanable body frame, two front wheels which are arranged side by side in a left-right direction of the body frame, and a horn while ensuring a sufficient sound pressure of a warning sound issued from the horn.

### How to Solve the Problem

In order to achieve the object, one aspect that the invention can take is a vehicle comprising:
a body frame;
a left front wheel and a right front wheel arranged side by side in a left-right direction of the body frame;
a steering device configured to turn the left front wheel and the right front wheel;
a link mechanism disposed above the left front wheel and the right front wheel, and configured to change positions of the left front wheel and the right front wheel relative to the body frame to thereby cause the body frame to lean to the left or right of the vehicle;
a link cover portion covering at least a part of the link mechanism, being non-displaceable relative to the body frame, having a front portion disposed ahead of a wheel axle of the left front wheel and a wheel axle of the right front wheel in a front-rear direction of the body frame, wherein a lower end of the front portion is disposed above an upper end of the left front wheel and an upper end of the right front wheel in an up-down direction of the body frame in a case in which, where the vehicle is viewed from the front in the front-rear direction of the body frame, the body frame is in an upright state;
a horn having a lower end which is disposed: above the wheel axle of the left front wheel and the wheel axle of the right front wheel in the up-down direction of the body frame; below a lower end of the link mechanism in the up-down direction of the body frame; on the right of a left end of the left front wheel in the left-right direction of the body frame; and on the left of a right end of the right front wheel in the left-right direction of the body frame, in a case in which, where the vehicle is viewed from the front in the front-rear direction of the body frame, the body frame is in the upright state as well as the left front wheel and the right front wheel are not turned by the steering device.

According to the arrangement described above, when the vehicle is viewed from the front thereof in such a state that the body frame is in the upright state and that the left front wheel and the right front wheel are not turned by the steering device, a space which is open to the front of the vehicle is defined above the respective wheel axles of the front wheels and below the lower end of the front portion of the link cover portion. On the other hand, when the vehicle is viewed from the left or right thereof in the same state, since a difference between the height of the lower end of the front portion of the link cover portion and the height of upper faces of the front wheels increases toward respective front ends of the front wheels, the space is defined which is gradually open in the left-right direction of the body frame. Since the horn is disposed in the position which faces the space described above, it is easy to ensure a sufficient sound pressure for the warning sound issued toward the front of the vehicle. Additionally, since the lower end of the horn is disposed so as to be situated below the lower end of the link mechanism, a distance between the link cover portion and the link mechanism particularly in the front-rear direction of the body frame can be made short, thereby making it possible to reduce the size of the link cover portion. Consequently, in a case where the horn is mounted on the vehicle comprising the leanable body frame and the two front wheels arranged side by side in the left-right direction of the body frame, the vehicle body can be reduced in size while ensuring the sufficient sound pressure for the warning sound.

The vehicle may be configured such that the horn is disposed behind the wheel axle of the left front wheel and the wheel axle of the right front wheel in the front-rear direction of the body frame, under a condition that the body frame is in the upright state and that the left front wheel and the right front wheel are not turned by the steering device.

The two front wheels are largely displaced below the link cover portion when the vehicle is traveling or the like. Because of this, the horn needs to be disposed so as to avoid movable ranges of the two front wheels. The portion defined behind the respective wheel axles of the two front wheels provides a high degree of freedom in achieving the arrangement described above without increasing the size of the link cover portion. On the other hand, it becomes difficult to ensure a warning sound having a sufficient sound pressure as the position of the horn is away from the front end of the vehicle toward the rear portion thereof. However, the space which gets less restricted to be more open as it extends toward the front of the vehicle is defined: above the respective wheel axles of the two front wheels; below the lower end of the link mechanism; on the right of the left end of the left front wheel in the left-right direction of the body frame; and on the left of the right end of the right front wheel in the left-right direction of the body frame, when the vehicle is viewed from the front thereof in such a state that the body frame is in the upright state and that the left front wheel and the right front wheel are not turned by the steering device. By adopting this configuration, even through the horn is disposed in the position which lies relatively away from the front end of the vehicle toward the rear portion thereof, a warning sound is given directionality by the space so defined as in a loudspeaker. Consequently, in a case where the horn is mounted on the vehicle comprising the leanable body frame and the two front wheels that are arranged side by side in the left-right direction of the body frame, the vehicle body can be reduced in size while ensuring the sufficient sound pressure for the warning sound.

The vehicle may be configured such that the horn is disposed behind a rear end of the left front wheel and a rear end of the right front wheel in the front-rear direction of the body frame, under the condition that the body frame is in the upright state and that the left front wheel and the right front wheel are not turned by the steering device.

The portion defined behind the respective rear ends of the two front wheels provides a higher degree of freedom in achieving the arrangement described above without increasing the size of the link cover portion. On the other hand, it becomes difficult to ensure a warning sound having a sufficient sound pressure since the position of the horn is further away from the front end of the vehicle toward the rear portion thereof. However, since the space defined below the link cover portion gives the directionality to a warning sound as by a loudspeaker, it is easy to ensure a warning sound having a sufficient sound pressure which is issued toward the front of the vehicle. Consequently, in a case where the horn is mounted on the vehicle comprising the leanable body frame and the two front wheels that are arranged side by side in the left-right direction of the body frame, the vehicle body can be reduced in size while ensuring the sufficient sound pressure for the warning sound.

The vehicle may comprise a leg shield attached to the body frame, and disposed behind the rear end of the left front wheel and the rear end of the right front wheel in the front-rear direction of the body frame. In this case, the vehicle may be configured such that the horn is disposed ahead of the leg shield in the front-rear direction of the body frame.

According to the configuration described above, in performing maintenance and inspection work on the horn, the leg shield mounted on the body frame does not have to be removed, thereby improving the work efficiency. Additionally, it becomes unnecessary to secure a space where to accommodate the horn within the leg shield. Because of this, not only can a sufficient sound pressure be secured for a warning sound but also the leg shield can be reduced in size. Consequently, in a case where the horn is mounted on the vehicle comprising the leanable body frame and the two front wheels that are arranged side by side in the left-right direction of the body frame, the vehicle body can be reduced in size while ensuring the sufficient sound pressure for the warning sound.

In a case where the vehicle comprises the leg shield as described above, the horn may be fixed to the body frame.

According to this configuration, a structure for fixing the horn does not have to be provided on the leg shield. Consequently, compared with a leg shield having such a fixing structure mounted thereon, the leg shield can be reduced in size, while improving the efficiency of performing the work in relation to maintenance and inspection. Consequently, in a case where the horn is mounted on the vehicle comprising the leanable body frame and the two front wheels that are arranged side by side in the left-right direction of the body frame, the vehicle body can be reduced in size while ensuring the sufficient sound pressure for the warning sound.

Alternatively, the vehicle may be configured such that:
the leg shield has an opening; and
the horn is disposed behind the opening in the front-rear direction of the body frame.

According to this configuration, the horn is restricted from being splashed with water spread by the two front wheels. Consequently, in a case where the horn is mounted on the vehicle comprising the leanable body frame and the two front wheels that are arranged side by side in the left-right direction of the body frame, the vehicle body can be reduced in size while ensuring the sufficient sound pressure for the warning sound.

The link mechanism may comprise:
an upper cross member;
a lower cross member disposed below the upper cross member in the up-down direction of the body frame;
a left side member disposed above the left front wheel in the up-down direction of the body frame; and
a right side member disposed above the right front wheel in the up-down direction of the body frame.

In this case, the vehicle may be configured such that the upper cross member, the lower cross member, the left side member, and the right side member are so connected that the upper cross member and the lower cross member are held in postures which are parallel to each other, and that the left side member and the right side member are held in postures which are parallel to each other.

To compare the parallel four joint system with a so-called double wishbone link mechanism, with the parallel four joint link system, a group of components making up the link mechanism is easy to be gathered into the link cover portion. Consequently, it is easy to secure the space where to dispose the horn below the link cover portion. In other words, the degree of freedom in the arrangement of the horn can be enhanced while restricting the enlargement in size of the link cover portion. Consequently, in a case where the horn is mounted on the vehicle comprising the leanable body frame and the two front wheels that are arranged side by side in the left-right direction of the body frame, the vehicle body can be reduced in size while ensuring the sufficient sound pressure for the warning sound.

### Brief Description of the Drawings

Fig. 1 is a side view of the whole a vehicle according to one embodiment, viewed from the left thereof.
Fig. 2 is a front view showing a front portion of the vehicle of Fig. 1.
Fig. 3 is a plan view showing the front portion of the vehicle of Fig. 1.
Fig. 4 is a plan view showing the front portion of the vehicle shown in Fig. 1 when the vehicle is steered.
Fig. 5 is a front view showing the front portion of the vehicle shown in Fig. 1 when the vehicle is caused to lean.
Fig. 6 is a front view showing the front portion of the vehicle shown in Fig. 1 when the vehicle is caused to lean and is steered.
Fig. 7 is a front view showing a position of a horn provided in the vehicle of Fig. 1.
Fig. 8 is a left side view including a partial section view for showing the position of the horn of Fig. 7.
Fig. 9 is a front view showing a position of a horn according to a modified example.
Fig. 10 is a left side view including a partial section view for showing the position of the horn of Fig. 9.

### Embodiments of the Invention

Referring to the accompanying drawings, an example of the embodiment will be described in detail below.

In the accompanying drawings, an arrow F denotes a front or forward direction of a vehicle. An arrow B denotes a back/rear or backward/rearward direction of the vehicle. An arrow U denotes an up or upward direction of the vehicle. An arrow D denotes a down or downward direction of the vehicle. An arrow R denotes a right or rightward direction of the vehicle. An arrow L denotes a left or leftward direction of the vehicle.

A vehicle turns with a body frame leaning in a left-right direction of the vehicle relative to a vertical direction. Accordingly, in addition to the directions based on the vehicle, directions based on the body frame will be defined. In the accompanying drawings, an arrow FF denotes a front or forward direction of the body frame. An arrow FB denotes a back/rear or backward/rearward of the body frame. An arrow FU denotes an up or upward direction of the body frame. An arrow FD denotes a down or downward direction of the body frame. An arrow FR denotes a right or rightward direction of the body frame. An arrow FL denotes a left or leftward direction of the body frame.

In this description, a "front-rear direction of the body frame," a "left-right direction of the body frame" and an "up-down direction of the body frame" means a front-rear direction, a left-right direction and an up-down direction based on the body frame as viewed from a rider who rides the vehicle. "A side of or sideways of the body frame" means directly on the right or left of the body frame.

In this description, an expression reading "something extends in the front-rear direction of the body frame" includes a situation in which something extends while being inclined in relation to the front-rear direction of the body frame and means that something extends with a gradient which is closer to the front-rear direction of the body frame rather than the left-right direction and the up-down direction of the body frame.

In this description, an expression reading "something extends in the left-right direction of the body frame" includes a situation in which something extends while being inclined in relation to the left-right direction of the body frame and means that something extends with a gradient which is closer to the left-right direction of the body frame rather than the front-rear direction of the body frame and the up-down direction of the body frame.

In this description, an expression reading "something extends in the up-down direction of the body frame" includes a situation in which something extends while being inclined in relation to the up-down direction of the body frame and means that something extends with a gradient which is closer to the up-down direction of the body frame rather than the front-rear direction of the body frame and the left-right direction of the body frame.

In this description, an expression reading the "body frame is in the upright state" means that the up-down direction of the body frame coincides with the vertical direction in such a state that the vehicle is not steered. In this state, the directions based on the vehicle and the directions based on the vehicle frame coincide. When the vehicle is turning with the body frame leaning in the left-right direction relative to the vertical direction, the left-right direction of the vehicle does not coincide with the left-right direction of the body frame. Additionally, the up-and-down direction of the vehicle does not coincide with the up-and-down direction of the body frame, too. However, the front-rear direction of the vehicle coincides with the front-rear direction of the body frame.

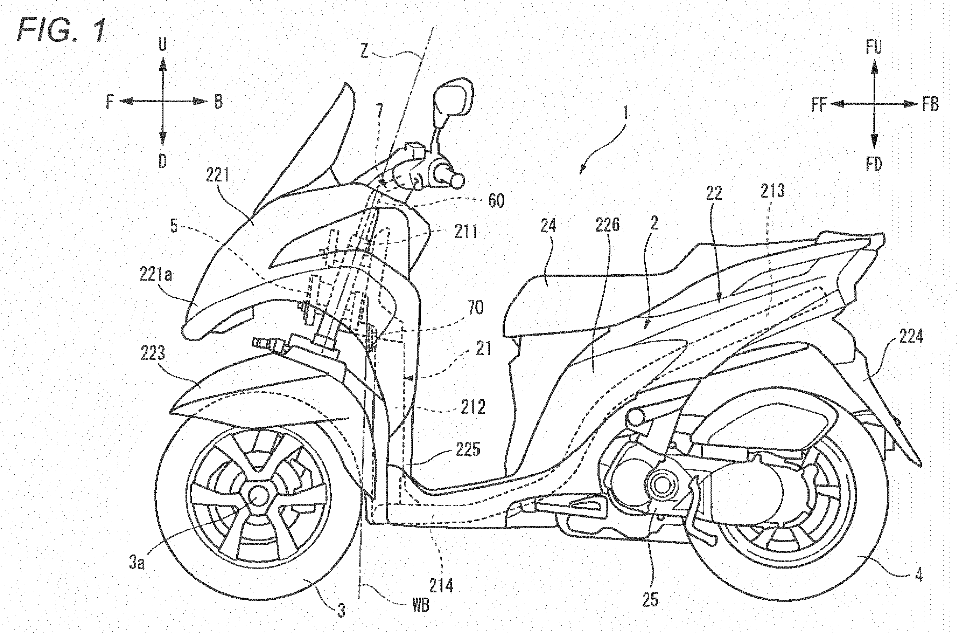

Referring to Figs. 1 to 8, a vehicle 1 according to an embodiment of the invention will be described. The vehicle 1 is a vehicle which is driven by means of power generated from a power source and which comprises a leanable body frame and two front wheels which are arranged side by side in the left-right direction of the body frame.

Fig. 1 is a left side view wherein the whole of the vehicle 1 is viewed from the left thereof. The vehicle 1 comprises a vehicle main body 2, a pair of left and right front wheels 3, a rear wheel 4, a link mechanism 5 and a steering mechanism 7.

The vehicle main body 2 comprises a body frame 21, a body cover 22, a seat 24 and a power unit 25. In Fig. 1, the body frame 21 is in an upright state. The following description which refers to Fig. 1 will be made on the premise that the body frame 21 is in the upright state.

The body frame 21 comprises a head pipe 211, a down frame 212, and a rear frame 213. In Fig. 1, portions of the body frame 21 which are hidden by the body cover 22 are shown by dashed lines. The body frame 21 supports the seat 24 and the power unit 25. The power unit 25 supports the rear wheel 4. The power unit 25 comprises a power source such as an engine, an electric motor, a battery or the like and a device such as a transmission. The power source produces a force by which the vehicle 1 is driven.

The head pipe 211 is disposed at a front portion of the vehicle 1. When the body frame 21 is viewed from the left thereof, an upper portion of the head pipe 211 is disposed behind a lower portion of the head pipe 211.

The down frame 212 is connected to the head pipe 211. The down frame 212 is disposed directly behind the head pipe 211. The down frame 212 extends in the up-down direction of the body frame 21.

The rear frame 213 is disposed directly behind the down frame 212. The rear frame 213 extends in the front-rear direction of the body frame 21. The rear frame 213 supports the seat 24 and the power unit 25.

The body cover 22 comprises a front cover 221, a pair of left and right front fenders 223, a rear fender 224 and a leg shield 225. The body cover 22 is a body part which covers at least partially body parts which are mounted on the vehicle 1 such as the pair of left and right front wheels 3, the body frame 21, the link mechanism 5 and the like.

The front cover 221 is disposed ahead of the seat 24. The front cover 221 covers at least partially the link mechanism 5 and the steering mechanism 7.

At least portions of the pair of left and right front fenders 223 are disposed directly below the front cover 221. At least the portions of the pair of left and right front fenders 223 are disposed directly above the pair of left and right front wheels 3, respectively.

At least portion of the rear fender 224 is disposed directly above the rear wheel 4.

The leg shield 225 is disposed in a position where the leg shield 225 covers at least partially legs of the rider. The leg shield 225 is disposed behind the pair of left and right front wheels 3 and ahead of the seat 24.

At least portions of the pair of left and right front wheels 3 are disposed directly below the head pipe 211. At least portions of the pair of left and right front wheels 3 are disposed directly below the front cover 221.

At least portion of the rear wheel 4 is disposed below the seat 24. At least portion of the rear wheel 4 is disposed directly below the rear fender 224.

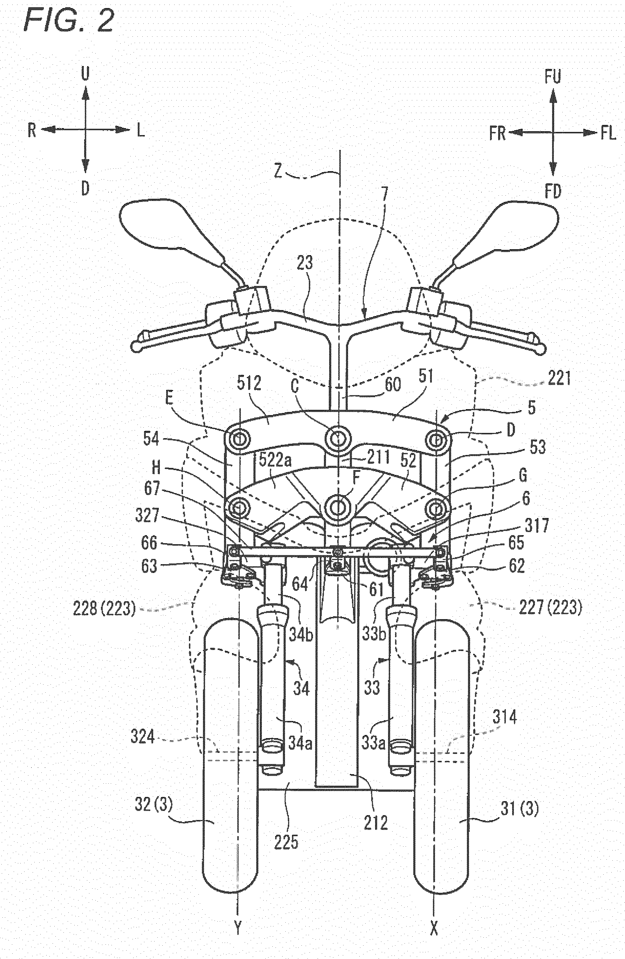

Fig. 2 is a front view of the front portion of the vehicle 1 as viewed from the front of the body frame 21. In Fig. 2, the body frame 21 is in the upright state. The following description which refers to Fig. 2 will be made on the premise that the body frame 21 is in the upright state. In Fig. 2, those shown therein are depicted as being seen through the front cover 221 and the pair of left and right front fenders 223 which are shown by dashed lines.

The pair of left and right front wheels 3 include a left front wheel 31 and a right front wheel 32. The left front wheel 31 is disposed on the left of the head pipe 211 which constitutes a part of the body frame 21. The right front wheel 32 is disposed on the right of the head pipe 211. The left front wheel 31 and the right front wheel 32 are disposed so as to be arranged side by side in the left-right direction of the body frame 21.

The steering mechanism 7 comprises a left shock absorbing mechanism 33, a right shock absorbing mechanism 34, a left bracket 317 and a right bracket 327.

The left shock absorbing mechanism 33 comprises a left outer tube 33a. The left outer tube 33a supports the left front wheel 31. The left outer tube 33a extends in the up-down direction of the body frame 21. The left outer tube 33a comprises a left supporting axle 314 at a lower end portion thereof. The left front wheel 31 is supported by the left supporting axle 314.

The left shock absorbing mechanism 33 comprises a left inner tube 33b. The left inner tube 33b extends in the up-down direction of the body frame 21. The left inner tube 33b is disposed directly above the left outer tube 33a in such a state that part of the left inner tube 33b is inserted in the left outer tube 33a. An upper portion of the left inner tube 33b is fixed to the left bracket 317.

The left shock absorbing mechanism 33 is a so-called telescopic shock absorbing mechanism. The left inner tube 33b moves relatively to the left outer tube 33a in a direction in which the left outer tube 33a extends, whereby the left shock absorbing mechanism 33 is allowed to extend and contract in the extending direction of the left outer tube 33a. This enables the left shock absorbing mechanism 33 to absorb a displacement of the left front wheel 31 relative to the left inner tube 33b in the up-down direction of the body frame 21.

The left outer tube 33a and the left inner tube 33b constitute a pair of telescopic elements which are arranged so as to be arranged side by side in the front-rear direction of the body frame 21.

The right shock absorbing mechanism 34 comprises a right outer tube 34a. The right outer tube 34a supports the right front wheel 32. The right outer tube 34a extends in the up-down direction of the body frame 21. The right outer tube 34a comprises a right supporting axle 324 at a lower end portion thereof. The right front wheel 32 is supported by the right supporting axle 324.

The right shock absorbing mechanism 34 comprises a right inner tube 34b. The right inner tube 34b extends in the up-down direction of the body frame 21. The right inner tube 34b is disposed directly above the right outer tube 34a in such a state that part thereof is inserted in the right outer tube 34a. An upper portion of the right inner tube 34b is connected to a right bracket 327.

The right shock absorbing mechanism 34 is a so-called telescopic shock absorbing mechanism. The right inner tube 34b moves relatively to the right outer tube 34a in a direction in which the right outer tube 34a extends, whereby the right shock absorbing mechanism 34 is allowed to extend and contract in the extending direction of the right outer tube 34a. This enables the right shock absorbing mechanism 34 to absorb a displacement of the right front wheel 32 relative to the right inner tube 34b in the up-down direction of the body frame 21.

The right outer tube 34a and the right inner tube 34b constitute a pair of telescopic elements which are arranged so as to be arranged side by side in the front-rear direction of the body frame 21.

The steering mechanism 7 comprises a steering force transmitting mechanism 6. The steering force transmitting mechanism 6 comprises a handlebar 23 and a steering shaft 60. The handlebar 23 is attached to an upper portion of the steering shaft 60. A part of the steering shaft 60 is turnably supported on the head pipe 211. A central turning axis Z of the steering shaft 60 extends in the up-down direction of the body frame 21. As shown in Fig. 1, the upper portion of the steering shaft 60 is disposed behind a lower portion thereof. Consequently, the central turning axis Z of the steering shaft 60 is inclined in the front-rear direction of the body frame 21. The steering shaft 60 turns about the central turning axis Z in response to the rider operating the handlebar 23.

The steering force transmitting mechanism 6 transmits a steering force with which the rider operates the handlebar 23 to the left bracket 317 and the right bracket 327. A specific configuration thereof will be described in detail later.

In the vehicle 1 according to the above embodiment, the link mechanism 5 adopts a four parallel joint link system (also referred to as a parallelogram link).

As shown in Fig. 2, the link mechanism 5 is disposed below the handlebar 23. The link mechanism 5 is disposed above the left front wheel 31 and the right front wheel 32. The link mechanism 5 comprises an upper cross member 51, a lower cross member 52, a left side member 53 and a right side member 54. The link mechanism 5 never turns about the central turning axis Z relative to the body frame 21 irrespective of the turning of the steering shaft 60 turns about the central turning axis Z in association with the operation of the handlebar 23.

The upper cross member 51 comprises a plate member 512. The plate member 512 is disposed directly ahead of the head pipe 211. The plate member 512 extends in the left-right direction of the body frame 21.

An intermediate portion of the upper cross member 51 is supported on the head pipe 211 by a support portion C. The upper cross member 51 can turn relative to the head pipe 211 about an intermediate upper axis which passes through the support portion C and extends in the front-rear direction of the body frame 21.

A left end portion of the upper cross member 51 is supported on the left side member 53 by a support portion D. The upper cross member 51 can turn relative to the left side member 53 about a left upper axis which passes through the support portion D and extends in the front-rear direction of the body frame 21.

A right end portion of the upper cross member 51 is supported on the right side member 54 by a support portion E. The upper cross member 51 can turn relative to the right side member 54 about a right upper axis which passes through the support portion E and extends in the front-rear direction of the body frame 21.

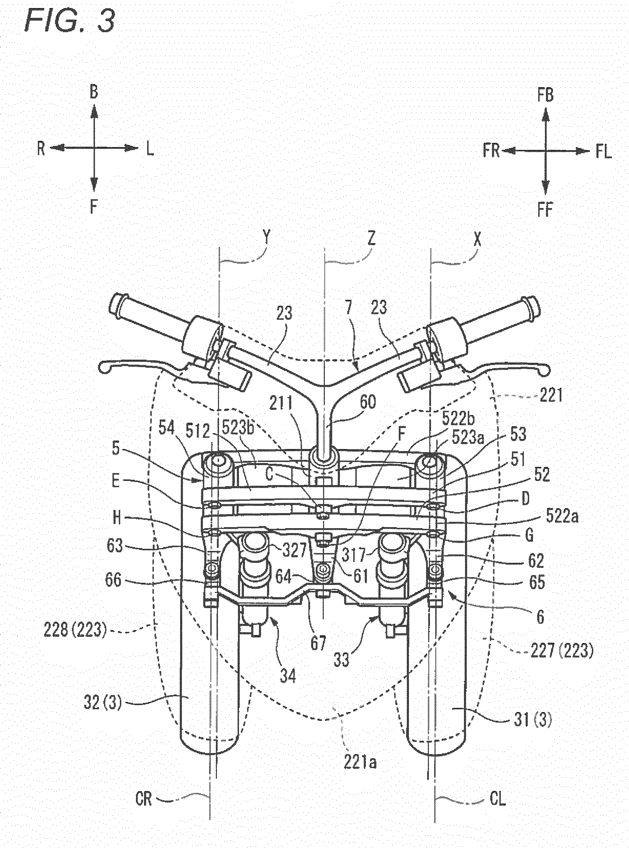

Fig. 3 is a plan view of the front portion of the vehicle 1 as viewed from the above the body frame 21. In Fig. 3, the body frame 21 is in the upright state. The following description which refers to Fig. 3 will be made on the premise that the body frame 21 is in the upright state. In Fig. 3, those shown therein are depicted as being seen through the front cover 221 and the pair of front fenders 223 which are shown by dashed lines.

As shown in Fig. 3, the lower cross member 52 comprises a front plate member 522a and a rear plate member 522b. The front plate member 522a is disposed directly ahead of the head pipe 211. The rear plate member 522b is disposed directly behind the head pipe 211. The front plate member 522a and the rear plate member 522b extend in the left-right direction of the body frame 21. The front plate member 522a and the rear plate member 522b are connected together by the left connecting block 523a and the right connecting block 523b. The left connecting block 523a is disposed on the left of the head pipe 211. The right connecting block 523b is disposed on the right of the head pipe 211.

The lower cross member 52 is disposed below the upper cross member 51. A lengthwise dimension of the lower cross member 52 in relation to the left-right direction of the body frame 21 is exactly or almost the same as a lengthwise dimension of the upper cross member 51 in relation to the left-right direction of the body frame 21. The lower cross member 52 extends parallel to the upper cross member 51.

An intermediate portion of the lower cross member 52 is supported on the head pipe 211 by a support portion F. The lower cross member 52 can turn about an intermediate lower axis which passes through the support portion F and extends in the front-rear direction of the body frame 21.

A left end portion of the lower cross member 52 is supported on the left side member 53 by a support portion G. The lower cross member 52 can turn about a left lower axis which passes through the support portion G and extends in the front-rear direction of the body frame 21.

A right end portion of the lower cross member 52 is supported on the right side member 54 by a support portion H. The lower cross member 52 can turn about a right lower axis which passes through the support portion H and extends in the front-rear direction of the body frame 21.

The intermediate upper axis, the right upper axis, the left upper axis, the intermediate lower axis, the right lower axis, and the left lower axis extend parallel to one another. The intermediate upper axis, the right upper axis, the left upper axis, the intermediate lower axis, the right lower axis and the left lower axis are disposed above the left front wheel 31 and the right front wheel 32.

As shown in Figs. 2 and 3, the left side member 53 is disposed directly on the left of the head pipe 211. The left side member 53 is disposed above the left front wheel 31. The left side member 53 extends in a direction in which the head pipe 211 extends. The left side member 53 extends in a direction in which the central turning axis Z of the steering shaft 60 extends. An upper portion of the left side member 53 is disposed behind a lower portion thereof.

The lower portion of the left side member 53 is connected to the left bracket 317. The left bracket 317 can turn about a left center axis X relative to the left side member 53. The left center axis X extends in a direction in which the left side member 53 extends. As shown in Fig. 2, the left center axis X extends parallel to the central turning axis Z of the steering shaft 60 in the up-down direction of the body frame 21. As shown in Fig. 3, the left center axis X extends parallel to the central turning axis Z of the steering shaft 60 in the front-rear direction of the body frame 21.

As shown in Figs. 2 and 3, the right side member 54 is disposed directly on the right of the head pipe 211. The right side member 54 is disposed above the right front wheel 32. The right side member 54 extends in the direction in which the head pipe 211 extends. The right side member 54 extends in the direction in which the central turning axis Z of the steering shaft 60 extends. An upper portion of the right side member 54 is disposed behind a lower portion thereof.

A lower portion of the right side member 54 is connected to the right bracket 327. The right bracket 327 can turn about a right center axis Y relative to the right side member 54. The right center axis Y extends in a direction in which the right side member 54 extends. As shown in Fig. 2, the right center axis Y extends parallel to the central turning axis Z of the steering shaft 60 in the up-down direction of the body frame 21. As shown in Fig. 3, the right center axis Y extends parallel to the central turning axis Z of the steering shaft 60 in the front-rear direction of the body frame 21.

Thus, as has been described above, the upper cross member 51, the lower cross member 52, the left side member 53 and the right side member 54 are supported on the body frame 21 so that the upper cross member 51 and the lower cross member 52 are held in postures which are parallel to each other and so that the left side member 53 and the right side member 54 are held in postures which are parallel to each other.

As shown in Figs. 2 and 3, the steering force transmitting mechanism 6 comprises, in addition to the handlebar 23 and the steering shaft 60 which have been described above, an intermediate transmission plate 61, a left transmission plate 62, a right transmission plate 63, an intermediate joint 64, a left joint 65, a right joint 66 and a tie rod 67.

The intermediate transmission plate 61 is connected to the lower portion of the steering shaft 60. The intermediate transmission plate 61 cannot turn relatively to the steering shaft 60. The intermediate transmission plate 61 can turn about the intermediate turning axis Z of the steering shaft 60 relative to the head pipe 211. A front portion of the intermediate transmission plate 61 is narrower in relation to a width in the left-right direction of the body frame 21 than a rear portion thereof.

The left transmission plate 62 is disposed directly on the left of the intermediate transmission plate 61. The left transmission plate 62 is connected to a lower portion of the left bracket 317. The left transmission plate 62 cannot turn relative to the left bracket 317. The left transmission plate 62 can turn about the left center axis X relative to the left side member 53. A front portion of the left transmission plate 62 is narrower in relation to a width in the left-right direction of the body frame 21 than a rear portion thereof.

The right transmission plate 63 is disposed directly on the right of the intermediate transmission plate 61. The right transmission plate 63 is connected to a lower portion of the right bracket 327. The right transmission plate 63 cannot turn relatively to the right bracket 327. The right transmission plate 63 can turn about the right center axis Y relative to the right side member 54. A front portion of the right transmission plate 63 is narrower in relation to a width in the left-right direction of the body frame 21 than a rear portion thereof.

As shown in Fig. 3, the intermediate joint 64 is connected to the front portion of the intermediate transmission plate 61 via a shaft which extends in the up-down direction of the body frame 21. The intermediate transmission plate 61 and the intermediate joint 64 can turn relatively about the shaft portion. The left joint 65 is disposed directly on the left of the intermediate joint 64. The left joint 65 is connected to the front portion of the left transmission plate 62 via a shaft which extends in the up-down direction of the body frame. The left transmission plate 62 and the left joint 65 can turn relatively about the shaft portion. The right joint 66 is disposed directly on the right of the intermediate joint 64. The right joint 66 is connected to the front portion of the right transmission plate 63 via a shaft which extends in the up-down direction of the body frame. The right transmission plate 63 and the right joint 66 can turn relatively about the shaft portion.

A shaft portion which extends in the front-rear direction of the body frame 21 is provided at a front portion of the intermediate joint 64. A shaft portion which extends in the front-rear direction of the body frame 21 is provided at a front portion of the left joint 65. A shaft portion which extends in the front-rear direction of the body frame 21 is provided at a front portion of the right joint 66. The tie rod 67 extends in the left-right direction of the body frame 21. The tie rod 67 is connected to the intermediate joint 64, the left joint 65 and the right joint 66 via those shaft portions. The tie rod 67 and the intermediate joint 64 can turn relatively about the shaft portion which is provided at the front portion of the intermediate joint 64. The tie rod 67 and the left joint 65 can turn relatively about the shaft portion which is provided at the front portion of the left joint 65. The tie rod 67 and the right joint 66 can turn relatively about the shaft portion which is provided at the front portion of the right joint 66.

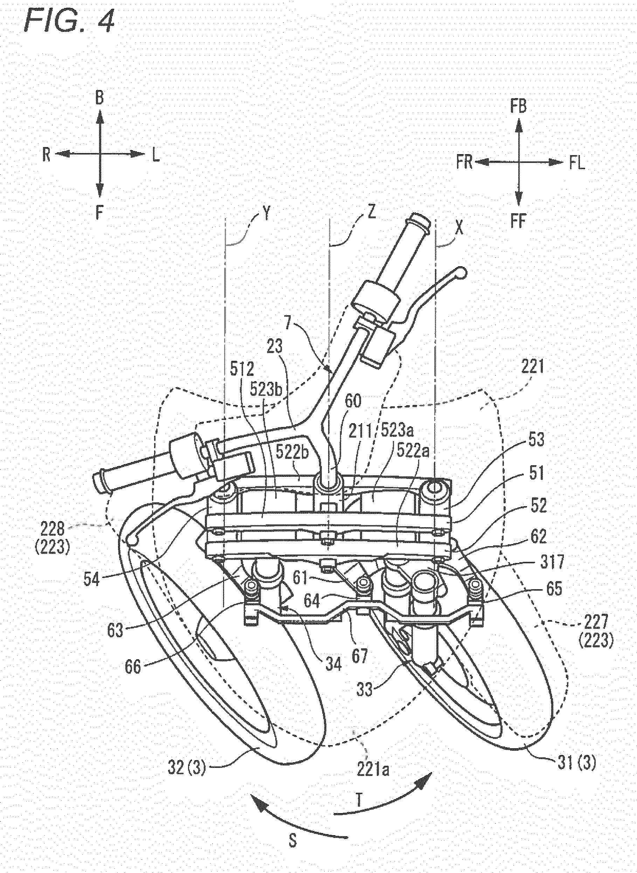

Next, referring to Figs. 3 and 4, a steering operation of the vehicle 1 will be described. Fig. 4 is a plan view of the front portion of the vehicle 1 under a condition that the left front wheel 31 and the right front wheel 32 turned to the left, as viewed from the above the body frame 21. In Fig. 4, those shown therein are depicted as being seen through the front cover 221 and the pair of front fenders 223 which are shown by dashed lines.

When the rider operates the handlebar 23, the steering shaft 60 turns about the central turning axis Z relative to the head pipe 211. When the handlebar 23 is turned to the left as shown in Fig. 4, the steering shaft 60 turns in a direction indicated by an arrow T. In association with the turn of the steering shaft 60, the intermediate transmission plate 61 turns in the direction indicated by the arrow T about the central turning axis Z relative to the head pipe 211.

In association with the turning of the intermediate transmission plate 61 in the direction indicated by the arrow T, the intermediate joint 64 of the tie rod 67 turns relative to the intermediate transmission plate 61 in a direction indicated by an arrow S. This moves the tie rod 67 rightwards and rearwards with its posture maintained as it is.

In association with the rightward and rearward movement of the tie rod 67, the left joint 65 and the right joint 66 of the tie rod 67 turn in the direction indicated by the arrow S relative to the left transmission plate 62 and the right transmission plate 63, respectively. This causes the left transmission plate 62 and the right transmission plate 63 to turn in the direction indicated by the arrow T while the tie rod 67 maintains its posture as it is.

When the left transmission plate 62 turns in the direction indicated by the arrow T, the left bracket 317, which cannot turn relative to the left transmission plate 62, turns in the direction indicated by the arrow T about the left center axis X relative to the left side member 53.

When the right transmission plate 63 turns in the direction indicated by the arrow T, the right bracket 327, which cannot turn relative to the right transmission plate 63, turns in the direction indicated by the arrow T about the right center axis Y relative to the right side member 54.

When the left bracket 317 turns in the direction indicated by the arrow T, the left shock absorbing mechanism 33, which is connected to the left bracket 317 via the left inner tube 33b, turns in the direction indicated by the arrow T about the left center axis X relative to the left side member 53. When the left shock absorbing mechanism 33 turns in the direction indicated by the arrow T, the left front wheel 31, which is supported on the left shock absorbing mechanism 33 via the left supporting axle 314, turns in the direction indicated by the arrow T about the left center axis X relative to the left side member 53.

When the right bracket 327 turns in the direction indicated by the arrow T, the right shock absorbing mechanism 34, which is connected to the right bracket 327 via the right inner tube 34b, turns in the direction indicated by the arrow T about the right center axis Y relative to the right side member 54. When the right shock absorbing mechanism 34 turns in the direction indicated by the arrow T, the right front wheel 32, which is supported on the right shock absorbing mechanism 34 via the right supporting axle 324, turns in the direction indicated by the arrow T about the right center axis Y relative to the right side member 54.

When the rider operates the handlebar 23 so as to turn to the right, the elements described above turn in the direction indicated by the arrow S. Since the elements move the other way around in relation to the left-right direction, the detailed description thereof will be omitted here.

Thus, as has been described heretofore, the steering force transmitting mechanism 6 transmits the steering force to the left front wheel 31 and the right front wheel 32 in response to the operation of the handlebar 23 by the rider. The left front wheel 31 and the right front wheel 32 turn about the left center axis X and the right center axis Y, respectively, in the direction corresponding to the direction in which the handlebar 23 is operated by the rider.

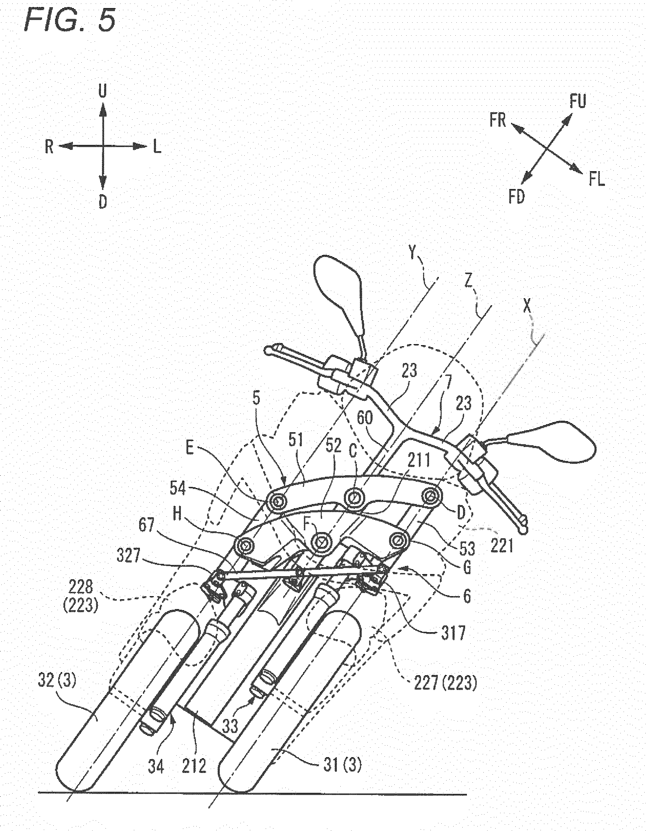

Next, referring to Figs. 2 and 5, a leaning operation of the vehicle 1 will be described. Fig. 5 is a front view of the front portion of the vehicle 1 as viewed from the front of the body frame 21 when the body frame 21 leans to the left of the vehicle 1. In Fig. 5, those shown therein are depicted as being seen through the front cover 221 and the pair of front fenders 223 which are shown by dashed lines.

As shown in Fig. 2, when the body frame 21 is in the upright state, when the vehicle 1 is viewed from the front of the body frame 21, the link mechanism 5 has a rectangular shape. As shown in Fig. 5, with the body frame 21 leaning, when the vehicle 1 is viewed from the front of the body frame 21, the link mechanism 5 has a parallelogram shape. The deformation of the link mechanism 5 is associated with the leaning of the body frame 21 in the left-right direction. The operation of the link mechanism 5 means that the upper cross member 51, the lower cross member 52, the left side member 53 and the right side member 54 which constitute the link mechanism 5 turn relatively about the turning axes which pass through the corresponding support portions C to H, whereby the shape of the link mechanism 5 changes.

For example, as shown in Fig. 5, when the rider causes the vehicle 1 to lean to the left, the head pipe 211 leans to the left from the vertical direction. When the head pipe 211 leans, the upper cross member 51 turn rightward about the intermediate upper axis which passes through the support portion C relative to the head pipe 211. Similarly, the lower cross member 52 turn rightward about the intermediate lower axis which passes through the support portion F relative to the head pipe 211. This causes the upper cross member 51 to move to the left relative to the lower cross member 52.

As the upper cross member 51 moves to the left, the upper cross member 51 turns rightward about the left upper axis which passes through the support portion D and the right upper axis which passes through the support portion E relative to the left side member 53 and the right side member 54, respectively. Similarly, the lower cross member 52 turns rightward about the left lower axis which passes through the support portion G and the right lower axis which passes through the support portion H relative to the left side member 53 and the right side member 54, respectively. This causes the left side member 53 and the right side member 54 to lean leftward in relation to the vertical direction while maintaining their postures that are parallel to the head pipe 211.

As this occurs, the lower cross member 52 moves to the left relative to the tie rod 67. As the lower cross member 52 moves to the left, the shaft portions which are provided at the respective front portions of the intermediate joint 64, the left joint 65 and the right joint 66 turn relative to the tie rod 67. This allows the tie rod 67 to hold a parallel posture to the upper cross member 51 and the lower cross member 52.

As the left side member 53 leans to the left, the left bracket 317 which is connected to the left side member 53 leans to the left. As the left bracket 317 leans to the left, the left shock absorbing mechanism 33 which is connected to the left bracket 317 leans to the left. As the left shock absorbing mechanism 33 leans to the left, the left front wheel 31 supported on the left shock absorbing mechanism 33 leans to the left while holding its posture parallel to the head pipe 211.

As the right side member 54 leans to the left, the right bracket 327 which is connected to the right side member 54 leans to the left. As the right bracket 327 leans to the left, the right shock absorbing mechanism 34 which is connected to the right bracket 327 leans to the left. As the right shock absorbing mechanism 34 leans to the left, the right front wheel 32 supported on the right shock absorbing mechanism 34 leans to the left while holding its posture parallel to the head pipe 211.

The leaning operations of the left front wheel 31 and the right front wheel 32 are described based on the vertical direction. However, when the vehicle 1 leans (when the link mechanism 5 is activated to operate), the up-down direction of the body frame 21 does not coincide with the vertical direction. In the event that the leaning operations are described based on the up-down direction of the body frame 21, when the link mechanism 5 is activated to operate, the relative positions of the left front wheel 31 and the right front wheel 32 to the body frame 21 change. In other words, the link mechanism 5 changes the relative positions of the left front wheel 31 and the right front wheel 32 to the body frame 21 in the up-down direction of the body frame 21 to thereby cause the body frame 21 to lean relative to the vertical direction.

When the rider causes the vehicle 1 to lean to the right, the elements lean to the right. Since the elements move the other way around in relation to the left-right direction, the detailed description thereof will be omitted here.

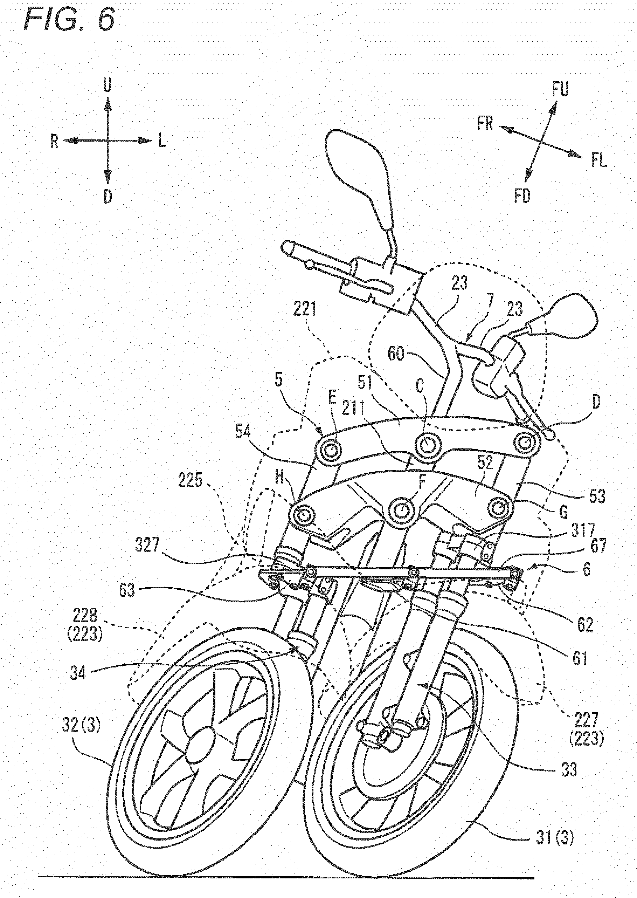

Fig. 6 is a front view of the front portion of the vehicle with the body frame 21 caused to lean and steered. Fig. 6 shows a state that the vehicle 1 is steered or turned to the left while leaning to the left. As a result of this steering operation, the left front wheel 31 and the right front wheel 32 are turned to the left, and as a result of the leaning operation, the left front wheel 31 and the right front wheel 32 lean to the left together with the body frame 21. Namely, in this state, the link mechanism 5 exhibits the parallelogram shape, and the tie rod 67 moves toward the left rear from its position which takes when the body frame 21 is in the upright state.

The vehicle 1 according to this embodiment comprises a horn 70. Referring to Figs. 1, 7 and 8, the position of the horn 70 will be described.

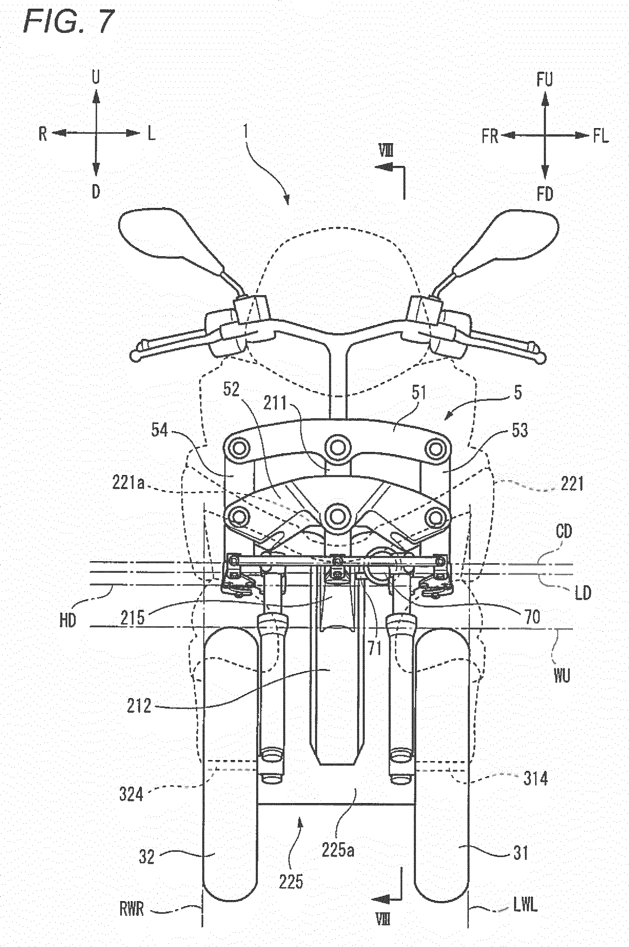

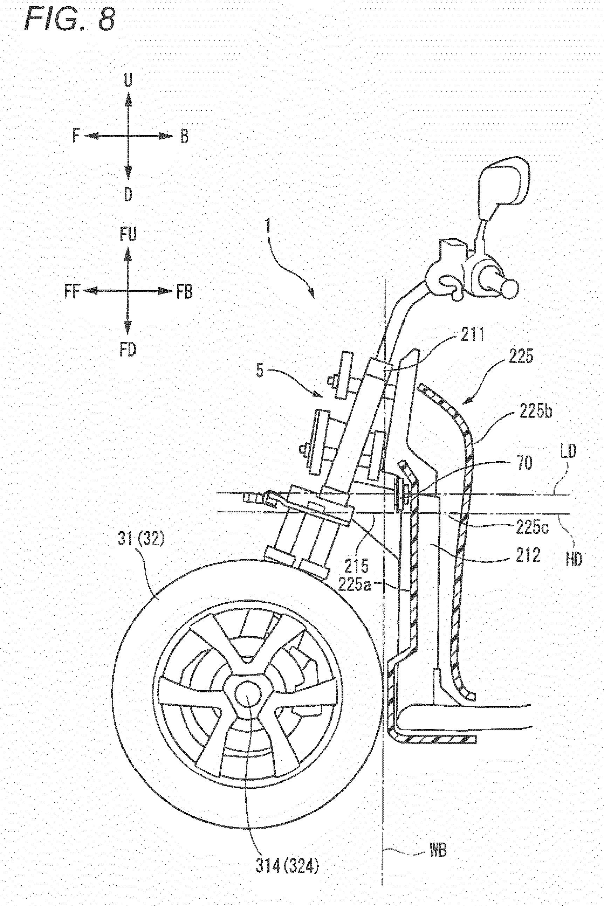

Fig. 7 is a front view of the front portion of the vehicle 1 as viewed from the front of the body frame 21. In Fig. 7, the front portion of the vehicle 1 is shown as viewed through the front cover 221 and the pair of left and right front fenders 223 which are both indicated by dashed lines. Fig. 8 is a side view of the front portion of the vehicle 1 as viewed from the left thereof, showing only the leg shield 225 with a section view as taken along a line VIII-VIII in Fig. 7. Figs. 7 and 8 show a state in which the body frame 21 is in the upright state as well as the left front wheel 31 and the right front wheel 32 are not turned by the steering device 7. When referred to herein, the "state in which the left front wheel 31 and the right front wheel 32 are not turned" means a state in which the orientation of a straight line CL that passes through a front end and a rear end of the left front wheel 31 and the orientation of a straight line CR that passes through a front end and a rear end of the right front wheel 32 shown in Fig. 3 coincide with the front-rear direction of the body frame 21. In other words, the "state in which the left front wheel 31 and the right front wheel 32 are not turned" is the states of the left front wheel 31 and the right front wheel 32 when the vehicle travels straight ahead. However, this state does not define whether the vehicle is moving or is at a halt. This state includes not only a case where the vehicle is moving but also a case where the vehicle is at a halt. The following description that refers to Figs. 7 and 8 will be made based on this state.

As shown in Fig. 1, the link mechanism 5 is disposed above the left front wheel 31 and the right front wheel 32. The front cover 221 (an example of a link cover portion) covers a part of the link mechanism 5. The front cover 221 cannot be displaced relative to the body frame 21. The front cover 221 has the front portion 221 a. The front portion 221 a is disposed ahead of the supporting axles 3a of the front wheels 3 in relation to the front-rear direction of the body frame 21. As shown in Fig. 7, a lower end CD of the front portion 221 a is disposed above upper ends WU of the left front wheel 31 and the right front wheel 32 in the up-down direction of the body frame 21.

In the state shown in Fig. 7, a lower end HD of the horn 70 is disposed above the left supporting axle 314 (an example of a wheel axle) of the left front wheel 31 and the right supporting axle 324 (an example of a wheel axle) of the right front wheel 32 in the up-down direction of the body frame 21. In addition, the lower end HD of the horn 70 is disposed below a lower end LD of the link mechanism 5 in the up-down direction of the body frame 21. In this embodiment, the lower end LD of the link mechanism 5 corresponds to the lower end of the left side member 53 and the lower end of the right side member 54. Further, the lower end LD of the horn 70 is disposed on the right of a left end LWL of the left front wheel 31 in the left-right direction of the body frame 21 and on the left of a right end RWR of the right front wheel 32 in the left-right direction of the body frame 21.

According to the arrangement described above, when the vehicle 1 is viewed from the front thereof in such a state that the body frame 21 is in the upright state and that the left front wheel 31 and the right front wheel 32 are not turned by the steering device 7, a space which is open to the front of the vehicle 1 is defined above the wheel axle (the left supporting axle 314) of the left front wheel 31 and the wheel axle (the right supporting axle 324) of the right front wheel 32 and below the lower end CD of the front portion 221 a of the front cover 221. On the other hand, when the vehicle 1 is viewed from the left or right thereof in the same state, since a difference between the height of the lower end CD of the front portion 221 a of the front cover 221 and the height of upper faces of the front wheels 3 increases toward respective front ends of the front wheels 3, the space is defined which is gradually open in the left-right direction of the body frame 21. Since the horn 70 is disposed in the position which faces the space described above, it is easy to ensure a sufficient sound pressure for the warning sound issued toward the front of the vehicle 1. Additionally, since the lower end HD of the horn 70 is disposed so as to be situated below the lower end LD of the link mechanism 5, a distance between the front cover 221 and the link mechanism 5 particularly in the front-rear direction of the body frame 21 can be made short, thereby making it possible to reduce the size of the front cover 221. Consequently, in a case where the horn 70 is mounted on the vehicle 1 comprising the leanable body frame 21 and the two front wheels 3 arranged side by side in the left-right direction of the body frame 21, the vehicle body can be reduced in size while ensuring the sufficient sound pressure for the warning sound.

In the state shown in Fig. 8, the horn 70 is disposed behind the left supporting axle 314 of the left front wheel 31 and the right supporting axle 324 of the right front wheel 32 in the front-rear direction of the body frame 21.

The left front wheel 31 and the right front wheel 32 are largely displaced below the front cover 221 when the vehicle 1 is traveling or the like. Because of this, the horn 70 needs to be disposed so as to avoid movable ranges of the left front wheel 31 and the right front wheel 32. The portion defined behind the respective wheel axles (the left supporting axle 314 and the right supporting axle 324) of the left front wheel 31 and the right front wheel 32 provides a high degree of freedom in achieving the arrangement described above without increasing the size of the front cover 221. On the other hand, it becomes difficult to ensure a warning sound having a sufficient sound pressure as the position of the horn 70 is away from the front end of the vehicle 1 toward the rear portion thereof. However, the space which gets less restricted to be more open as it extends toward the front of the vehicle 1 is defined: above the respective wheel axles of the left front wheel 31 and the right front wheel 32; below the lower end LD of the link mechanism 5; on the right of the left end LWL of the left front wheel 31 in the left-right direction of the body frame 21; and on the left of the right end RWR of the right front wheel 32 in the left-right direction of the body frame 21, when the vehicle 1 is viewed from the front thereof in such a state that the body frame 21 is in the upright state and that the left front wheel 31 and the right front wheel 32 are not turned by the steering device 7. By adopting this configuration, even through the horn 70 is disposed in the position which lies relatively away from the front end of the vehicle 1 toward the rear portion thereof, a warning sound is given directionality by the space so defined as in a loudspeaker. Consequently, in a case where the horn 70 is mounted on the vehicle 1 comprising the leanable body frame 21 and the two front wheels 3 that are arranged side by side in the left-right direction of the body frame 21, the vehicle body can be reduced in size while ensuring the sufficient sound pressure for the warning sound.

More specifically, in the state shown in Fig. 8, the horn 70 is disposed behind the respective rear ends WB of the left front wheel 31 and the right front wheel 32 in the front-rear direction of the body frame 21.

The portion defined behind the respective rear ends WB of the left front wheel 31 and the right front wheel 32 provides a high degree of freedom in achieving the arrangement which avoids the movable ranges of the left front wheel 31 and the right front wheel 32 without increasing the size of the front cover 221. On the other hand, it becomes difficult to ensure a warning sound having a sufficient sound pressure since the position of the horn 70 is further away from the front end of the vehicle 1 toward the rear portion thereof. However, since the space defined below the front cover 221 gives the directionality to a warning sound as by a loudspeaker, it is easy to ensure a warning sound having a sufficient sound pressure which is issued toward the front of the vehicle 1. Consequently, in a case where the horn 70 is mounted on the vehicle 1 comprising the leanable body frame 21 and the two front wheels 3 that are arranged side by side in the left-right direction of the body frame 21, the vehicle body can be reduced in size while ensuring the sufficient sound pressure for the warning sound.

As shown in Fig. 8, the leg shield 225 is mounded on the down frame 212 which is a part of the body frame 21. The leg shield 225 includes a front leg shield 225a and a rear leg shield 225b. The front leg shield 225a extends in the up-down direction of the body frame 21 along the down frame 212. The rear shield 225b is disposed behind the down frame 212 in the front-rear direction of the body frame 21. The rear shield 225b extends in the up-down direction of the body frame 21. A space 225c is defined between the front shield 225a and the rear shield 225b. The front shield 225a is disposed behind the respective rear ends WB of the left front wheel 31 and the right front wheel 32 in the front-rear direction of the body frame 21. The horn 70 is disposed ahead of the front shield 225a in the front-rear direction of the body frame 21.

According to the configuration described above, in performing maintenance and inspection work on the horn 70, the leg shield 225 mounted on the down frame 212 does not have to be removed, thereby improving the work efficiency. Additionally, it becomes unnecessary to secure a space where to accommodate the horn 70 in the space 225c defined within the leg shield 225. Because of this, not only can a sufficient sound pressure be secured for a warning sound but also the leg shield 225 can be reduced in size. Consequently, in a case where the horn 70 is mounted on the vehicle 1 comprising the leanable body frame 21 and the two front wheels 3 that are arranged side by side in the left-right direction of the body frame 21, the vehicle body can be reduced in size while ensuring the sufficient sound pressure for the warning sound.

As shown in Fig. 7, the horn 70 is fixed to a connecting portion 215 which is a part of the body frame 21 via a stay 71. The connecting portion 215 connects the head pipe 211 and the down frame 212 together.

According to this configuration, a structure for fixing the horn 70 does not have to be provided on the leg shield 225. Consequently, compared with a leg shield having such a fixing structure mounted thereon, the leg shield 225 can be reduced in size, while improving the efficiency of performing the work in relation to maintenance and inspection. Consequently, in a case where the horn 70 is mounted on the vehicle 1 comprising the leanable body frame 21 and the two front wheels 3 that are arranged side by side in the left-right direction of the body frame 21, the vehicle body can be reduced in size while ensuring the sufficient sound pressure for the warning sound.

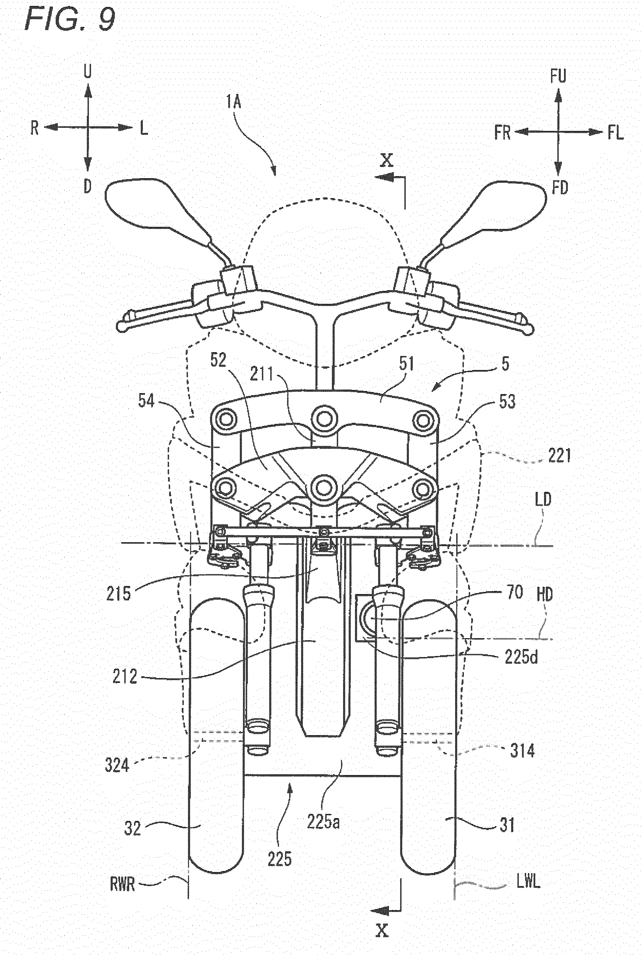

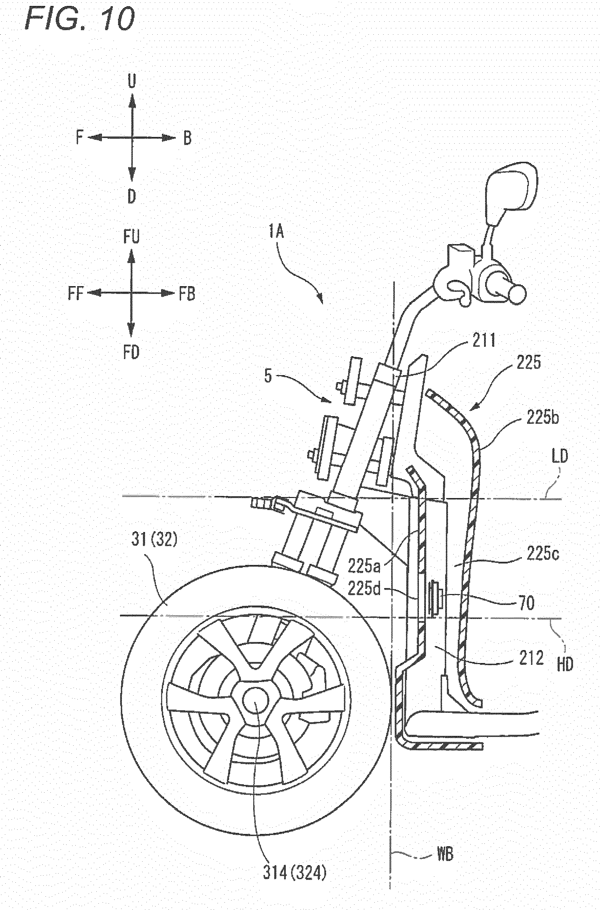

Next, referring to Figs. 9 and 10, a vehicle 1A according to a modified example will be described. Like reference numerals will be assigned to like elements to those of the vehicle 1 according to the above embodiment, and repetitive explanations will be omitted.

Fig. 9 is a front view of a front portion of the vehicle 1A as viewed from the front of a body frame 21. In Fig. 9, the front portion of the vehicle 1A is shown as viewed through a front cover 221 and a pair of left and right front fenders 223 which are both indicated by dashed lines. Fig. 10 is a side view of the front portion of the vehicle 1A as viewed from a left side thereof, showing only a leg shield 225 with a section view as taken along a line X-X in Fig. 9. Figs. 9 and 10 show a state in which the body frame 21 is in the upright state and a left front wheel 31 and a right front wheel 32 are not turned by a steering device 7. When referred to herein, the "state in which the left front wheel 31 and the right front wheel 32 are not turned" means a state in which the orientation of a straight line CL that passes through a front end and a rear end of the left front wheel 31 and the orientation of a straight line CR that passes through a front end and a rear end of the right front wheel 32 shown in Fig. 3 coincide with the front-rear direction of the body frame 21. The following description that refers to Figs. 9 and 10 will be made based on this state.

As well in this modified example, a lower end HD of a horn 70 is disposed above a left supporting axle 314 (an example of an axle) of the left front wheel 31 and a right supporting axle 324 (an example of an axle) of the right front wheel 32 in an up-down direction of the body frame 21. In addition, the lower end HD of the horn 70 is disposed below a lower end LD of the link mechanism 5 in the up-down direction of the body frame 21. Further, the lower end LD of the horn 70 is disposed on the right of a left end LWL of the left front wheel 31 in the left-right direction of the body frame 21 and on the left of a right end RWR of the right front wheel 32 in the left-right direction of the body frame 21. Since advantages to be obtained by the aforesaid arrangement are the same as what has been described above, repetitive explanations will be omitted here.

As well in this embodiment, the horn 70 is disposed behind the left supporting axle 314 of the left front wheel 31 and the right supporting axle 324 of the right front wheel 32 in a front-rear direction of the body frame 21. Since advantages to be obtained by the aforesaid arrangement are the same as what has been described above, repetitive explanations will be omitted here.

As well in this embodiment, the horn 70 is disposed behind respective rear ends WB of the left front wheel 31 and the right front wheel 32 in the front-rear direction of the body frame 21. Since advantages to be obtained by the aforesaid arrangement are the same as what has been described above, repetitive explanations will be omitted here.

In the vehicle 1A according to this modified example, a front shield 225a which makes up a part of a leg shield 225 has an opening 225d. The horn 70 is disposed directly behind the opening 225d in the front-rear direction of the body frame 21 within a space 225c defined by the front shield 225a and a rear shield 225b.

According to this configuration, the horn 70 is restricted from being splashed with water spread by the left front wheel 31 and the right front wheel 32. Consequently, in a case where the horn 70 is mounted on the vehicle 1 comprising the leanable body frame 21 and the two front wheels 3 that are arranged side by side in the left-right direction of the body frame 21, the vehicle body can be reduced in size while ensuring the sufficient sound pressure for the warning sound.

The embodiment described heretofore is intended to facilitate the understanding of the invention and is not intended to limit the invention. It is obvious that the invention can be modified or improved without departing from the scope thereof which is defined in the appended claims.

In the above embodiment and the modified example, the front cover 221 covers a part of the link mechanism 5. However, a configuration may be adopted in which the front cover 221 covers the whole of the link mechanism 5 if a lower end CD of a front portion 221 of the front cover 221 is disposed above upper ends WU of the left front wheel 31 and the right front wheel 32 in the up-down direction of the body frame 21.

In the above embodiment, a part of the horn 70 is visible below the front portion 221 a of the front cover 221 when the vehicle 1 is viewed from the front thereof in the front-rear direction of the body frame 21 in such a state that
the body frame 21 is in the upright state and that the left front wheel 31 and the right front wheel 32 are not turned by the steering device 7. However, the horn 70 may be covered entirely by the front cover 221 if, in the state described above, the lower end HD of the horn 70 is disposed: above the left support shat 314 of the left front wheel 31 and the right supporting axle 324 of the right front wheel 32 in the up-down direction of the body frame 21; below the lower end LD of the link mechanism 5 in the up-down direction of the body frame 21; on the right of a left end LWL of the left front wheel 31 in the left-right direction of the body frame 21; and on the left of a right end RWR of the right front wheel 32 in the left-right direction of the body frame 21. In addition, a configuration may be adopted in which the horn 70 is covered entirely by the front cover 221 or on the contrary, the horn 70 is exposed entirely out of the front cover 221 when the body frame 21 is caused to lean if, in the state described above, the lower end HD of the horn 70 is disposed: above the left support shat 314 of the left front wheel 31 and the right supporting axle 324 of the right front wheel 32 in the up-down direction of the body frame 21; below the lower end LD of the link mechanism 5 in the up-down direction of the body frame 21; on the right of the left end LWL of the left front wheel 31 in the left-right direction of the body frame 21; and on the left of the right end RWR of the right front wheel 32 in the left-right direction of the body frame 21.

In the embodiment and the modified example, the horn 70 is disposed behind the left supporting axle 314 of the left front wheel 31 and the right supporting axle 324 of the right front wheel 32 in the front-rear direction of the body frame 21. However, when the vehicle 1 is viewed from the front in the front-rear direction of the body frame 21 in the state that the body frame 21 is in the upright state, the horn 70 may be disposed ahead of the left supporting axle 314 of the left front wheel 31 and the right supporting axle 324 of the right front wheel 32 in the front-rear direction of the body frame 21 if the lower end HD of the horn 70 is disposed above the left supporting axle 314 of the left front wheel 31 and the right supporting axle 324 of the right front wheel 32 in the up-down direction of the body frame 21 and below the lower end LD of the link mechanism 5 in the up-down direction of the body frame 21.

In the above embodiment and the modified example, a sound emitting face of the horn 70 is oriented to the front in the front-rear direction of the body frame 21. However, a configuration may be adopted in which the sound emitting face of the horn 70 is oriented obliquely downwards toward the front in the up-down direction and the front-rear direction of the body frame 21.

In the above embodiment and the modified example, the left shock absorbing mechanism 33 and the right shock absorbing mechanism 34 each comprise the pair of telescopic mechanisms. However, the left shock absorbing mechanism 33 and the right shock absorbing mechanism 34 may each comprise a single telescopic mechanism.

In the above embodiment and the modified example, the vehicle 1 comprises the single rear wheel 4. However, a plurality of rear wheels may be provided.

In the above embodiment and the modified example, the center of the rear wheel 4 in relation to the left-right direction of the body frame 21 coincides with the center of the distance defined between the left front wheel 31 and the right front wheel 32 in relation to the left-right direction of the body frame 21. Although the configuration described above is preferable, the center of the rear wheel 4 in relation to the left-right direction of the body frame 21 may not coincide with the center of the distance defined between the left front wheel 31 and the right front wheel 32 in relation to the left-right direction of the body frame 21.

In the above embodiment and the modified example, the link mechanism 5 comprises the upper cross member 51 and the lower cross member 52. However, the link mechanism 5 may comprise a cross member other than the upper cross member 51 and the lower cross member 52. The "upper cross member" and the "lower cross member" are merely so called based on their relative positions in relation to the up-down direction. The upper cross member does not necessarily mean an uppermost cross member in the link mechanism 5. The upper cross member means a cross member which lies above another cross member which lies therebelow. The lower cross member does not necessarily mean a lowermost cross member in the cross mechanism 5. The lower cross member means a cross member which lies below another cross member which lies thereabove. At least one of the upper cross member 51 and the lower cross member 52 may be made up of two parts such as a right cross member and a left cross member. In this way, the upper cross member 51 and the lower cross member 52 may be made up of a plurality of cross members as long as they maintain the link function.

In the above embodiment and the modified example, the link mechanism 5 constitutes the so-called parallel four joint link system. To compare the parallel four joint system with a so-called double wishbone link mechanism, with the parallel four joint link system, a group of components making up the link mechanism 5 is easy to be gathered into the front cover 221. Consequently, it is easy to secure the space where to dispose the horn 70 below the front cover 221. In other words, the degree of freedom in the arrangement of the horn 70 can be enhanced while restricting the enlargement in size of the front cover 221. Consequently, in a case where the horn 70 is mounted on the vehicle 1 comprising the leanable body frame 21 and the two front wheels 3 that are arranged side by side in the left-right direction of the body frame 21, the vehicle body can be reduced in size while ensuring the sufficient sound pressure for the warning sound. However, the link mechanism 5 may adopt a double wishbone configuration.

When used in this description, the word "parallel" means that two straight lines which do not intersect each other as members while they are inclined at an angle falling within the range of ± 40 degrees are comprised therein. When used in this description in relation to a direction and/or a member, the word "along" means that a case where the direction or the member is inclined at an angle falling within the range of ± 40 degrees is comprised therein. When used in this description, the expression reading "something extends in a certain direction" means that a case where something extends while being inclined at an angle falling within the range of ± 40 degrees relative to the certain direction is comprised therein.

The invention can be embodied in many different forms. This description should be regarded as providing the embodiment according to the principle of the invention. The preferred embodiment which is at least described or illustrated in this description is so described or illustrated based on the understanding that the embodiment is not intended to limit the invention.

The limitative matters of the claims should not be limited by the embodiment described in this specification. The embodiment should be construed as being non-exclusive. For example, in this description, the terms "preferable" and "may" should be construed as being non-exclusive, and those terms mean, respectively, that it is "preferable but not limited thereto" and that it "may be acceptable but not limited thereto."

## Claims

1. A vehicle (1) comprising:
a body frame (21);
a left front wheel (31) and a right front wheel (32) arranged side by side in a left-right direction of the body frame (21);
a steering device (7) configured to turn the left front wheel (31) and the right front wheel (32);
a link mechanism (5) disposed above the left front wheel (31) and the right front wheel (32), and configured to change positions of the left front wheel (31) and the right front wheel (32) relative to the body frame (21) to thereby cause the body frame (21) to lean to the left or right of the vehicle; and
a link cover portion (221) covering at least a part of the link mechanism (5), being non-displaceable relative to the body frame (21), having a front portion (221 a) disposed ahead of a wheel axle (314) of the left front wheel (31) and a wheel axle (324) of the right front wheel (32) in a front-rear direction of the body frame (21), wherein a lower end (CD) of the front portion (221 a) is disposed above an upper end (WU) of the left front wheel (31) and an upper end (WU) of the right front wheel (32) in an up-down direction of the body frame (21) in a case in which, where the vehicle (1) is viewed from the front in the front-rear direction of the body frame (21), the body frame (21) is in an upright state;
**characterized by**
a horn (70) having a lower end (HD) which is disposed: above the wheel axle (314) of the left front wheel (31) and the wheel axle (324) of the right front wheel (32) in the up-down direction of the body frame (21); below a lower end (LD) of the link mechanism (5) in the up-down direction of the body frame (21); on the right of a left end (LWL) of the left front wheel (31) in the left-right direction of the body frame (21); and on the left of a right end (RWR) of the right front wheel (32) in the left-right direction of the body frame (21), in a case in which, where the vehicle (1) is viewed from the front in the front-rear direction of the body frame (21), the body frame (21) is in the upright state as well as the left front wheel (31) and the right front wheel (32) are not turned by the steering device (7).

2. The vehicle (1) as set forth in claim 1 wherein:
the horn (70) is disposed behind the wheel axle (314) of the left front wheel (31) and the wheel axle (324) of the right front wheel (32) in the front-rear direction of the body frame (21), under a condition that the body frame (21) is in the upright state and that the left front wheel (31) and the right front wheel (32) are not turned by the steering device (7).

3. The vehicle (1) as set forth in claim 2 wherein:
the horn (70) is disposed behind a rear end (WB) of the left front wheel (31) and a rear end (WB) of the right front wheel (32) in the front-rear direction of the body frame (21), under the condition that the body frame (21) is in the upright state and that the left front wheel (31) and the right front wheel (32) are not turned by the steering device (7).

4. The vehicle (1) as set forth in claim 3 comprising:
a leg shield (225) attached to the body frame (21), and disposed behind the rear end (WB) of the left front wheel (31) and the rear end (WB) of the right front wheel (32) in the front-rear direction of the body frame (21), wherein:
the horn (70) is disposed ahead of the leg shield (225) in the front-rear direction of the body frame (21).

5. The vehicle (1) as set forth in any one of claims 1 to 4 wherein:
the horn (70) is fixed to the body frame (21).

6. The vehicle (1) as set forth in claim 3 comprising:
a leg shield (225) attached to the body frame (21), disposed behind the rear end (WB) of the left front wheel (31) and the rear end (WB) of the right front wheel (32) in the front-rear direction of the body frame (21), and having an opening (225d) wherein:
the horn (70) is disposed behind the opening (225d) in the front-rear direction of the body frame (21).

7. The vehicle (1) as set forth in any one of claims 1 to 6 wherein:
the link mechanism (5) comprises:
an upper cross member (51);
a lower cross member (52) disposed below the upper cross member (51) in the up-down direction of the body frame (21);
a left side member (53) disposed above the left front wheel (31) in the up-down direction of the body frame (21); and
a right side member (54) disposed above the right front wheel (32) in the up-down direction of the body frame (21); and
the upper cross member (51), the lower cross member (52), the left side member (53), and the right side member (54) are so connected that the upper cross member (51) and the lower cross member (52) are held in postures which are parallel to each other, and that the left side member (53) and the right side member (54) are held in postures which are parallel to each other.

## Patentansprüche

1. Fahrzeug (1) mit:
einem Karosserierahmen (21);
einem linken Vorderrad (31) und einem rechten Vorderrad (32), die in einer Links-Rechts-Richtung des Karosserierahmens (21) nebeneinander angeordnet sind;
einer Lenkeinrichtung (7), die ausgebildet ist, das linke Vorderrad (31) und das rechte Vorderrad (32) einzuschlagen;
einem Verbindungsmechanismus (5), der über dem linken Vorderrad (31) und dem rechten Vorderrad (32) angeordnet und ausgebildet ist, Positionen des linken Vorderrads (31) und des rechten Vorderrads (32) relativ zu dem Karosserierahmen (21) zu ändern, um damit zu bewirken, dass der Karosserierahmen (21) sich auf die linke oder rechte Seite des Fahrzeugs neigt; und
einen Verbindungsabdeckbereich (221), der zumindest einen Teil des Verbindungsmechanismus (5) abdeckt, der relativ zu dem Karosserierahmen (21) nicht verschiebbar ist, der einen vorderen Bereich (221a) hat, der vor einer Radachse (314) des linken Vorderrads (31) und einer Radachse (324) des rechten Vorderrads (32) in einer Vorwärts-Rückwärts-Richtung des Karosserierahmens (21) angeordnet ist, wobei ein unteres Ende (CD) des vorderen Bereichs (221 a) über einem oberen Ende (WU) des linken Vorderrads (31) und einem oberen Ende (WU) des rechten Vorderrads (32) in einer Auf-Ab-Richtung des Karosserierahmens (21) angeordnet ist, wenn der Karosserierahmen (21) in einem aufrechten Zustand bei Betrachtung des Fahrzeugs (1) von vorne in der Vorwärts-Rückwärts-Richtung des Karosserierahmens (21) ist;
**gekennzeichnet durch**
eine Signalhupe (70) mit einem unteren Ende (HD), das angeordnet ist: über der Radachse (314) des linken Vorderrads (31) und der Radachse (324) des rechten Vorderrads (32) in der Auf-Ab-Richtung des Karosserierahmens (21); unter einem unteren Ende (LD) des Verbindungsmechanismus (5) in der Auf-Ab-Richtung des Karosserierahmens (21); auf der rechten Seite eines linken Endes (LWL) des linken Vorderrads (31) in der Links-Rechts-Richtung des Karosserierahmens (21); und auf der linken Seite eines rechten Endes (RWR) des rechten Vorderrads (32) in der Links-Rechts-Richtung des Karosserierahmens (21), wenn der Karosserierahmen (21) bei Betrachtung des Fahrzeugs (1) von vorne in der Vorwärts-Rückwärts-Richtung des Karosserierahmens (21) in dem aufrechten Zustand ist und das linke Vorderrad (31) und das rechte Vorderrad (32) nicht durch die Lenkeinrichtung (7) eingeschlagen sind.

2. Fahrzeug (1) nach Anspruch 1, wobei:
die Signalhupe (70) hinter der Radachse (314) des linken Vorderrads (31) und der Radachse (324) des rechten Vorderrads (32) in der Vorwärts-Rückwärts-Richtung des Karosserierahmens (21) unter der Voraussetzung angeordnet ist, dass der Karosserierahmen (21) in dem aufrechten Zustand ist und dass das linke Vorderrad (31) und das rechte Vorderrad (32) nicht durch die Lenkeinrichtung (7) eingeschlagen sind.

3. Fahrzeug (1) nach Anspruch 2, wobei:
die Signalhupe (70) hinter einem hinteren Ende (WB) des linken Vorderrads (31) und einem hinteren Ende (WB) des rechten Vorderrads (32) in der Vorwärts-Rückwärts-Richtung des Karosserierahmens (21) unter der Voraussetzung angeordnet ist, dass der Karosserierahmen (21) in dem aufrechten Zustand ist und dass das linke Vorderrad (31) und das rechte Vorderrad (32) nicht durch die Lenkeinrichtung (7) eingeschlagen sind.

4. Fahrzeug (1) nach Anspruch 3, das umfasst:
einen Beinschutz (225), der an dem Karosserierahmen (21) angebracht und hinter dem hinteren Ende (WB) des linken Vorderrads (31) und dem hinteren Ende (WB) des rechten Vorderrads (32) in der Vorwärts-Rückwärts-Richtung des Karosserierahmens (21) angebracht ist, wobei:
die Signalhupe (70) vor dem Beinschutz (225) in der Vorwärts-Rückwärts-Richtung des Karosserierahmens (21) angeordnet ist.

5. Fahrzeug (1) nach einem der Ansprüche 1 bis 4, wobei:
die Signalhupe (70) an dem Karosserierahmen (21) befestigt ist.

6. Fahrzeug (1) nach Anspruch 3, das aufweist:
einen Beinschutz (225), der an dem Karosserierahmen (21) angebracht ist, der ferner hinter dem hinteren Ende (WB) des linken Vorderrads (31) und dem hinteren Ende (WB) des rechten Vorderrads (32) in der Vorwärts-Rückwärts-Richtung des Karosserierahmens (21) angebracht ist und eine Öffnung (225d) aufweist, wobei:
die Signalhupe (70) hinter der Öffnung (225d) in der Vorwärts-Rückwärts-Richtung des Karosserierahmens (21) angeordnet ist.

7. Fahrzeug (1) nach einem der Ansprüche 1 bis 6, wobei:
der Verbindungsmechanismus (5) aufweist:
ein oberes Querelement (51);
ein unteres Querelement (52), das unter dem oberen Querelement (51) in der Auf-Ab-Richtung des Karosserierahmens (21) angeordnet ist;
ein linkes Seitenelement (53), das über dem linken Vorderrad (31) in der Auf-Ab-Richtung des Karosserierahmens (21) angeordnet ist; und
ein rechtes Seitenelement (54), das über dem rechten Vorderrad (32) in der Auf-Ab-Richtung des Karosserierahmens (21) angeordnet ist; und
wobei das obere Querelement (51), das untere Querelement (52), das linke Seitenelement (53) und das rechte Seitenelement (54) so verbunden sind, dass das obere Querelement (51) und das untere Querelement (52) in Stellungen gehalten sind, die parallel zueinander liegen, und wobei das linke Seitenelement (53) und das rechte Seitenelement (54) in Stellungen gehalten sind, die parallel zueinander sind.

## Revendications

1. Véhicule (1) comprenant :
un châssis (21) ;
une roue avant gauche (31) et une roue avant droite (32) agencées côte à côte dans une direction gauche-droite du châssis (21) ;
un dispositif de direction (7) configuré pour faire tourner la roue avant gauche (31) et la roue avant droite (32) ;
un mécanisme de liaison (5) disposé au-dessus de la roue avant gauche (31) et de la roue avant droite (32), et configuré pour modifier les positions de la roue avant gauche (31) et de la roue avant droite (32) par rapport au châssis (21) afin d'amener le châssis (21) à se pencher vers la gauche ou la droite du véhicule ; et
une partie de recouvrement de liaison (221) recouvrant au moins une partie du mécanisme de liaison (5), étant non déplaçable par rapport au châssis (21), ayant une partie avant (221a) disposée devant un essieu de roue (314) de la roue avant gauche (31) et un essieu de roue (324) de la roue avant droite (32) dans une direction avant-arrière du châssis (21), dans lequel une extrémité inférieure (CD) de la partie avant (221a) est disposée au-dessus d'une extrémité supérieure (WU) de la roue avant gauche (31) et une extrémité supérieure (WU) de la roue avant droite (32) dans une direction de haut en bas du châssis (21) dans un cas dans lequel, lorsque le véhicule (1) est observé depuis l'avant dans la direction avant-arrière du châssis (21), le châssis (21) est dans un état droit ;
**caractérisé par** :
un avertisseur sonore (70) ayant une extrémité inférieure (HD) qui est disposée : au-dessus de l'essieu de roue (314) de la roue avant gauche (31) et l'essieu de roue (324) de la roue avant droite (32) dans une direction de haut en bas du châssis (21) ; au-dessous d'une extrémité inférieure (LD) du mécanisme de liaison (5) dans la direction de haut en bas du châssis (21) ; à droite d'une extrémité gauche (LWL) de la roue avant gauche (31) dans la direction gauche-droite du châssis (21) ; et à gauche d'une extrémité droite (RWR) de la roue avant droite (32) dans la direction gauche-droite du châssis (21), dans le cas dans lequel, lorsque le véhicule (1) est observé de face dans la direction avant-arrière du châssis (21), le châssis (21) est à l'état droit et la roue avant gauche (31) et la roue avant droite (32) ne sont pas pivotées par le dispositif de direction (7).

2. Véhicule (1) selon la revendication 1, dans lequel :
l'avertisseur sonore (70) est disposé derrière l'essieu de roue (314) de la roue avant gauche (31) et l'essieu de roue (324) de la roue avant droite (32) dans la direction avant-arrière du châssis (21), dans une condition dans laquelle le châssis (21) est à l'état droit et en ce que la roue avant gauche (31) et la roue avant droite (32) ne sont pas pivotées par le dispositif de direction (7).

3. Véhicule (1) selon la revendication 2, dans lequel :
l'avertisseur sonore (70) est disposé derrière une extrémité arrière (WB) de la roue avant gauche (31) et une extrémité arrière (WB) de la roue avant droite (32) dans une direction avant-arrière du châssis (21), dans la condition dans laquelle le châssis (21) est à l'état droit et en ce que la roue avant gauche (31) et la roue avant droite (32) ne sont pas pivotées par le dispositif de direction (7).

4. Véhicule (1) selon la revendication 3, comprenant :
un protège-jambe (225) fixé sur le châssis (21), et disposé derrière l'extrémité arrière (WB) de la roue avant gauche (31) et l'extrémité arrière (WB) de la roue avant droite (32) dans la direction avant-arrière du châssis (21), dans lequel :
l'avertisseur sonore (70) est disposé devant le protège-jambe (225) dans la direction avant-arrière du châssis (21).

5. Véhicule (1) selon l'une quelconque des revendications 1 à 4, dans lequel :
l'avertisseur sonore (70) est disposé sur le châssis (21).

6. Véhicule (1) selon la revendication 3, comprenant :
un protège-jambe (225) fixé sur le châssis (21), disposé derrière l'extrémité arrière (WB) de la roue avant gauche (31) et l'extrémité arrière (WB) de la roue avant droite (32) dans la direction avant-arrière du châssis (21) et ayant une ouverture (225d), dans lequel :
l'avertisseur sonore (70) est disposé derrière l'ouverture (225d) dans la direction avant-arrière du châssis (21).

7. Véhicule (1) selon l'une quelconque des revendications 1 à 6, dans lequel :
le mécanisme de liaison (5) comprend :
une traverse supérieure (51) ;
une traverse inférieure (52) disposée au-dessous de la traverse supérieure (51) dans la direction de haut en bas du châssis (21) ;
un élément latéral gauche (53) disposé au-dessus de la roue avant gauche (31) dans la direction de haut en bas du châssis (21) ; et
un élément latéral droit (54) disposé au-dessus de la roue avant droite (32) dans la direction de haut en bas du châssis (21) ; et
la traverse supérieure (51), la traverse inférieure (52), l'élément latéral gauche (53) et l'élément latéral droit (54) sont raccordés de sorte que la traverse supérieure (51) et la traverse inférieure (52) sont maintenues dans des postures qui sont parallèles entre elles, et de sorte que l'élément latéral gauche (53) et l'élément latéral droit (54) sont maintenus dans des postures qui sont parallèles entre elles.
